# EUROPEAN PATENT APPLICATION

(11) **EP 3 904 489 A1**
(43) Date of publication of application: **03.11.2021**
(21) Application number: 19904976.8
(22) Date of filing: 17.12.2019
(51) Int. Cl.: C10G 7/08, C10G 7/12, B01D 3/34

(54) **METHOD FOR ELIMINATING PRESSURE DIFFERENCE IN DISTILLATION COLUMN**

(30) Priority: 27.12.2018 JP 2018245549
(71) Applicant: Kurita Water Industries Ltd., Tokyo 164-0001 (JP)
(72) Inventor: KARAKI, Keisuke, Tokyo 164-0001 (JP); MINAMI, Hiroaki, Tokyo 164-0001 (JP); EMORI, Kenta, Tokyo 164-0001 (JP)
(74) Representative: TBK
(86) International application number: PCT/JP2019/049313
(87) International publication number: WO 2020/137673

(57) **Abstract**

A method for eliminating pressure loss (pressure difference) caused by salt derived from impurities in raw materials in a distillation facility during operation without negative effect on the quality of products and production efficiency is provided. The method for eliminating occurrence of pressure difference caused by precipitation of salt in a distillation facility includes using a quaternary ammonium compound represented by the following formula [1] as a salt remover: 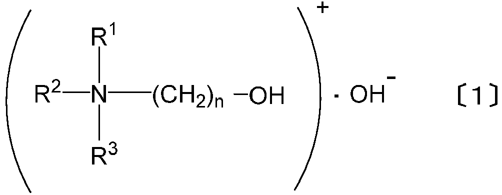 wherein R¹, R² and R³ each independently represent a hydrocarbon group having 1 to 4 carbon atoms, and n represents an integer of 1 to 10.

## Description

### Technical Field

The present invention relates to a method for eliminating pressure difference in a distillation column.

### Background Art

Precipitation of salts, typically ammonium chloride, inhibits the flow of a process in a distillation column in a distillation facility for a petroleum refinery process, a petrochemical process or a coal chemical process to cause pressure loss (hereinafter may be referred to as "pressure difference"), which causes the problem of reduction in use efficiency of the facility. Another problem is occurrence of severe local corrosion in the facility due to moisture absorbed by precipitated salt.

Under such circumstances, sublimation operation or a method of using cleaning water in a column have been usually used as methods for suppressing occurrence of pressure difference caused by precipitation of salt.

Sublimation operation refers to a method of operation in which the temperature of the distillation column is increased to sublimate salt precipitated and the salt is discharged to the column-top system of the distillation column. Sublimation operation enables precipitated salt to be removed quickly.

The method of using cleaning water refers to a method of treatment in which cleaning water is supplied to the top reflux line of the distillation column so that the cleaning water is supplied to the site where pressure difference has occurred due to precipitation of salt to dissolve and remove the salt. Supply of cleaning water can eliminate the pressure difference in a short time.

NPL 1, for example, discloses sublimation operation in which the temperature of the distillation column is increased in a short time to sublimate precipitated salt and the salt is discharged to the column-top system of the distillation column.

Furthermore, PTL 1 discloses distillation treatment of hydrocarbon oil containing a water-soluble salt, which is a method for distilling hydrocarbon oil, comprising introducing water into a distillation column.

### Citation List

### Patent Literature

### PTL 1: JP 2000-096067 A

### Non Patent Literature

NPL 1: GRACE DAVISON CATALAGRAM, ISSUE, 2010, No. 107, p. 34-39

### Summary of Invention

### Technical Problem

However, when the sublimation operation is temporarily used, the system is operated at a temperature higher than that in normal operation, and thus the range of the boiling point of fraction purified in the distillation column (base materials of petroleum products) is changed, and the product may not meet the standard. In that case, most of the fraction in sublimation operation is to be refined again in order to improve yield. Furthermore, when the sublimation operation is permanently used, the yield of light fractions must be sacrificed. Both cases result in reduction of production efficiency.

Furthermore, in the method of using cleaning water, pressure difference may occur again due to reprecipitation of salt or corrosion products unless drain water used for dissolving salt is appropriately discharged. Moreover, progress of corrosion may shorten the life of the facility itself.

The present invention has been made in view of such an actual situation and an object of the present invention is to provide a method for eliminating pressure loss (pressure difference) caused by salt derived from impurities in raw materials in a distillation facility during operation without negative effect on the quality of products or production efficiency.

### Solution to Problem

The present inventors have conducted intensive studies to solve the above problem and have found that the problem can be solved by supplying a specific quaternary ammonium compound to a distillation facility and bringing it into contact with salt precipitated to prepare a highly flowable neutral salt and discharge it to the outside of the system easily.

The present invention has been completed based on the above findings.

Accordingly, the present disclosure relates to the following.
(1) A method for eliminating occurrence of pressure difference caused by precipitation of salt in a distillation facility, comprising using a quaternary ammonium compound represented by the following formula [1] as a salt remover: 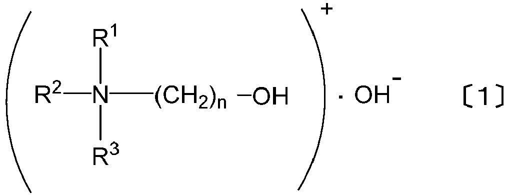 wherein R¹, R² and R³ each independently represent a hydrocarbon group having 1 to 4 carbon atoms, and n represents an integer of 1 to 10.
(2) The method for eliminating pressure difference according to the above (1), wherein R¹, R² and R³ in the formula [1] each independently represent a hydrocarbon group having 1 to 3 carbon atoms, and n represents an integer of 1 to 4.
(3) The method for eliminating pressure difference according to the above (1) or (2), wherein the quaternary ammonium compound is β-hydroxyethyl trimethylammonium hydroxide.
(4) The method for eliminating pressure difference according to any of the above (1) to (3), wherein the distillation facility is for a petroleum refinery process, a petrochemical process or a coal chemical process.
(5) The method for eliminating pressure difference according to any of the above (1) to (4), wherein the quaternary ammonium compound represented by the formula [1] is contained in a process fluid to be brought into contact with a distillation column in the distillation facility.
(6) An agent for eliminating occurrence of pressure difference caused by precipitation of salt in a distillation facility, comprising a quaternary ammonium compound represented by the following formula (1): 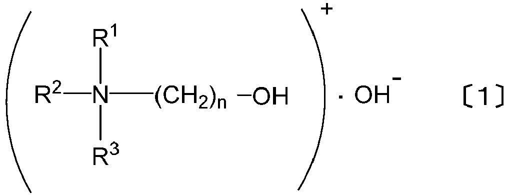 wherein R¹, R² and R³ each independently represent a hydrocarbon group having 1 to 4 carbon atoms, and n represents an integer of 1 to 10.

### Advantageous Effect of Invention

The present invention can provide a method for eliminating pressure loss (pressure difference) caused by salt derived from impurities in raw materials in a distillation facility during operation without negative effect on the quality of products and production efficiency.

### Brief Description of Drawings

[Fig. 1] Fig. 1 is a flow diagram illustrating a method for eliminating pressure difference in a distillation facility according to one embodiment of the present invention.
[Fig. 2] Fig. 2 is a block diagram of an apparatus for lab test used in Examples of the present invention.

### Description of Embodiments

### [Method for eliminating pressure difference]

The method for eliminating pressure difference of the present invention is a method for eliminating occurrence of pressure difference caused by precipitation of salt in a distillation facility, comprising using a quaternary ammonium compound represented by the following formula [1] as a salt remover: 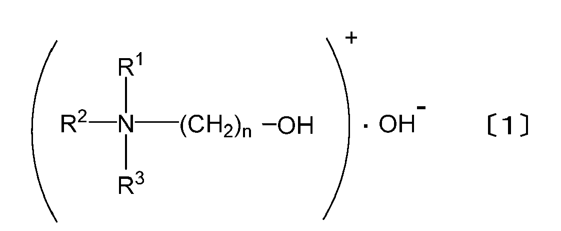 wherein R¹, R² and R³ each independently represent a hydrocarbon group having 1 to 4 carbon atoms, and n represents an integer of 1 to 10.

The present invention can eliminate pressure loss (which may be simply referred as "pressure difference" in the present description) caused by salt derived from impurities in raw materials in a distillation facility, for example, a distillation column, by using a quaternary ammonium compound represented by the above formula [1] as a salt remover. The salt remover has high basicity, and thus by bringing it into contact with precipitated salt, the base moiety of the salt may be substituted therewith to form a neutral salt. The neutral salt is highly hygroscopic and highly flowable, and thus salt can be discharged to the outside of the system of the distillation column in a process flow. The method for eliminating pressure difference of the present invention also includes preventing occurrence of pressure difference itself by suppressing accumulation of salt in the system in the distillation column by supplying a salt remover to the distillation column constantly when salt is not formed.

The present invention has no effect on fractions to be purified, does not reduce productivity, or does not affect the facility.

In the present invention, a quaternary ammonium compound represented by the following formula [1] is used as a salt remover: 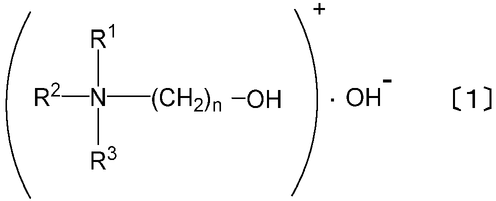 wherein R¹, R² and R³ each independently represent a hydrocarbon group having 1 to 4 carbon atoms, and n represents an integer of 1 to 10.

Examples of hydrocarbon groups having 1 to 4 carbon atoms in the formula [1] include a linear or branched alkyl group such as a methyl group, an ethyl group, an n-propyl group, an isopropyl group, an n-butyl group, an isobutyl group, a sec-butyl group and a t-butyl group.

Examples of the quaternary ammonium compounds include hydroxymethyl trimethylammonium hydroxide, hydroxymethyl triethylammonium hydroxide, hydroxyethyl trimethylammonium hydroxide, (2-hydroxyethyl)triethylammonium hydroxide and (3-hydroxypropyl)trimethylammonium hydroxide. Super strong basic compounds such as 1,8-diazabicyclo[5.4.0]undecene-7 may also be used.

One of these quaternary ammonium compounds may be used alone, or two or more of them may be used in combination.

It is preferable that R¹, R² and R³ are each independently a hydrocarbon group having 1 to 3 carbon atoms, and n is an integer of 1 to 4.

When the quaternary ammonium compound has low molecular weight, the compound has excellent solubility in water and is easy to be effective for eliminating pressure difference even in a small amount of addition.

β-Hydroxyethyl trimethylammonium hydroxide in which R¹, R² and R³ are a methyl group and n is 2 (also called choline) is particularly preferred as the quaternary ammonium compound.

Choline, a quaternary ammonium compound, which is a salt remover, is highly dissociating and highly basic, and thus reacts with salt components such as ammonium chloride to form choline chloride as shown by the following chemical reaction formula.

NH₄Cl+(H₃C)₃N+C₂H₄OH-OH⁻ →NH₄OH+(H₃C)₃N+C₂H₄OHCl

Choline chloride is decomposed by heat, and amines such as trimethylamine and N,N-dimethylaminoethanol and methyl chloride are mainly formed by the decomposition, and little hydrogen chloride is formed.

Furthermore, since choline chloride is highly hygroscopic and has excellent flowability, salt can be easily discharged to the outside of the system of the distillation column in a process flow. Moreover, choline chloride has much smaller metal corrosion properties than other amine hydrochlorides, and thus has a small risk of metal corrosion and inhibition of paths in the apparatus of distillation facility caused by accumulation of salt.

It is preferable that the quaternary ammonium compound is usually used in the form of an aqueous solution from the viewpoint of, e.g., handling. Its content in the aqueous solution is not particularly limited, and is preferably 1% by mass or more and less than 100% by mass, preferably 5% by mass or more and 50% by mass or less, and further preferably 10% by mass or more and 30% by mass or less. When the content of the quaternary ammonium compound is in the above range, salt may be easily dissolved, and precipitated salt may be discharged to the outside of the system in the form of a neutral salt in a short time.

A quaternary ammonium compound may be used alone, or other components such as ammonia and neutralizing amine may be included and used in addition to the quaternary ammonium compound as the salt remover used in the present invention.

The type of salts which cause pressure difference in the present invention is not particularly limited, and examples thereof include ammonium chloride, ammonium hydrogen sulfide and ammonium sulfate.

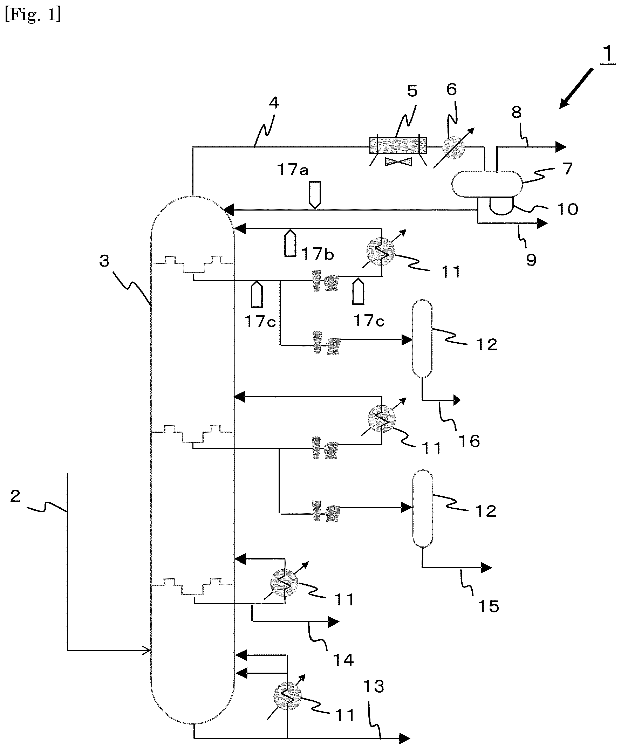

Fig. 1 is a flow diagram illustrating a method for eliminating pressure difference in a distillation facility (single column type atmospheric distillation apparatus) according to one embodiment of the present invention. One embodiment of the method for eliminating pressure difference of the present invention will be described referring to the flow diagram.

In the distillation facility 1, for example, raw material oil passes through line 2 and is heated to a temperature of usually 350°C or more in a heating furnace (not shown), and then is continuously supplied to the distillation column 3 and fractionated into a heavy oil fraction, a heavy light oil fraction, a light oil fraction, a heavy naphtha fraction, a naphtha fraction and a gas fraction.

For example, naphtha, which has a relatively low boiling point ranging from 35 to 80°C and which is discharged from the top of the distillation column 3, passes through line 4, is condensed in an air-cooled cooler 5 or a water-cooled cooler 6, and collected in a naphtha receiver (a type of overhead receivers) 7. Gas and liquid are separated in the naphtha receiver 7, and fuel gas or liquified petroleum gas and the like is collected from line 8 as a gas fraction, and a naphtha fraction is collected from line 9 as a liquid fraction. Furthermore, water (overhead receiver water) stored at the bottom of the naphtha receiver 7 is discharged from a drain part 10 of the naphtha receiver 7.

Likewise, for example, the heavy oil fraction having a boiling point of about 350°C or more is fractionated at the bottom of the column and collected from line 13. Furthermore, for example, the heavy light oil fraction having a boiling point of about 240°C to 350°C is collected from line 14. For example, the light oil fraction having a boiling point of about 170°C to 250°C is collected from line 15 through a side stripper 12. The heavy naphtha fraction having a boiling point of about, for example, 80°C to 180°C is collected from line 16 through a side stripper 12.

In Fig. 1, a heater 11 is used for circulating a portion of the fractions fractionated out from the distillation column into the column from the viewpoint of rectification.

To which part the salt remover is added (injected) is not particularly limited, and it is preferable that the salt remover is added to the top reflux line of an atmospheric distillation apparatus (a process fluid circulated to the highest position of the column from the column-top system), the return line of the top-pump around (a fraction corresponding to heavy naphtha and gasoline fraction; a process fluid to be circulated and cooled), and the extraction line of the top-pump around (a fraction corresponding to heavy naphtha and gasoline fraction; a process fluid to be circulated and cooled) from the viewpoint of efficient conversion of precipitated salt into neutral salt so that the salt is discharged to the outside of the system of the distillation column in a short time. It is more preferable that the salt remover is added to the top reflux line. Further, any line may be combined to add the salt remover to a plurality of lines.

For example, it is preferable to add (inject) the salt remover to any of the lines for injecting salt remover 17a, 17b and 17c, or to a plurality of the lines shown in Fig. 1.
Line for injecting salt remover 17a: fluid of top reflux
Line for injecting salt remover 17b: fluid returned from top-pump around
Line for injecting salt remover 17c: fluid extracted from top-pump around

It is preferable that a quill nozzle is used in the injection lines from the viewpoint of dispersion into the process fluid.

For the above method for atmospheric distillation of petroleum, an example of a single column type has been described, but the present invention is not limited thereto. Pressure difference can be eliminated or occurrence of pressure difference can be prevented by a method similar to the above method even by atmospheric distillation of petroleum using another example of a single column or atmospheric distillation of petroleum using two columns and the like.

The distillation facility is not particularly limited, and it is preferable that the facility is for a petroleum refinery process, a petrochemical process or a coal chemical process.

It is preferable that a quaternary ammonium compound represented by the formula [1] is contained in a process fluid which may be brought into contact with a distillation column in the distillation facility.

When the quaternary ammonium compound represented by the formula [1] is contained in a process fluid, generation of salt derived from the process fluid flowing in the distillation facility including a distillation column, a tank and a line attached thereto can be efficiently prevented and pressure difference in the distillation column can be eliminated or prevented.

The process fluid is not particularly limited, and examples thereof include a naphtha fraction to kerosene and a fraction corresponding to light oil.

### [Agent for eliminating pressure difference]

The agent for eliminating pressure difference of the present invention eliminates occurrence of pressure difference caused by precipitation of salt in a distillation facility, and contains a quaternary ammonium compound represented by the formula [1]: 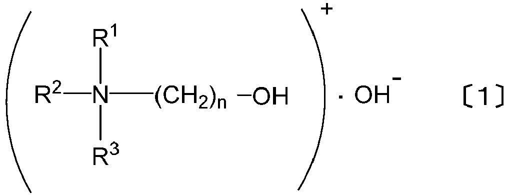 wherein R¹, R² and R³ each independently represent a hydrocarbon group having 1 to 4 carbon atoms, and n represents an integer of 1 to 10.

The hydrocarbon group having 1 to 4 carbon atoms in the formula [1], specific examples thereof, preferable groups of R¹, R² and R³, preferable integers for n, specific examples and particularly preferred examples of the quaternary ammonium compounds described above are the same as described for the salt remover of the formula [1] used for the above method for eliminating pressure difference.

A quaternary ammonium compound alone may be used as an agent for eliminating pressure difference, and other components such as ammonia and neutral amine may be included to be used in addition to the quaternary ammonium compound.

### Examples

Next, the present invention will be described in more detail with reference to Examples, but the present invention is not limited to these Examples.

In Examples and Comparative Examples, solubility of precipitated salt, reprecipitation and discharge of salt to the trap were evaluated (including analysis of chloride in the components of discharged products) by the following method.

### (a) Solubility of precipitated salt

In Examples and Comparative Examples, the wall of the fractionating column and the surface of glass random packing were visually observed during the test of eliminating pressure difference to determine whether precipitated salt was dissolved or not based on the following criteria.
A: No precipitated salt observed; transparency of glass random packing increased, or packing became transparent
B: Precipitated salt observed; transparency of glass random packing reduced, or packing became opaque

### (b) Reprecipitation

The wall of the fractionating column and the surface of glass random packing were visually observed during the test to determine whether salt dissolved was reprecipitated or not based on the following criteria.
A: Reprecipitation of dissolved salt was not observed; transparency of glass random packing increased, or packing became transparent
B: Reprecipitation of dissolved salt was observed; transparency of glass random packing reduced, or packing became opaque

### (c) Discharge of salt to trap

During the test, the presence of discharge in the lower trap of the fractionating column was visually observed and chloride in the discharge was analyzed to determine whether the salt used was discharged or not based on the following criteria.
A: Discharge observed and inclusion of chloride in discharge identified by analysis
B: No discharge observed, or although discharge observed, inclusion of chloride cannot be identified by analysis

Chloride was analyzed by the following method.

### <Method of analyzing chloride>

Evaluation was carried out by analyzing the amount of chlorine ions in the components of the discharge using Capillary Electrophoresis System (Agilent 7100 made by Agilent Technologies).

### <Test for hygroscopic properties>

### (Experiment Example 1)

Hygroscopic properties of ammonium chloride and choline chloride were investigated by the following test for hygroscopic properties.

In the test for hygroscopic properties, 5 g of ammonium chloride which had been evaporated to dryness at 105°C for 2 hours or more and choline chloride which had been evaporated to dryness at 105°C for 2 hours or more were each put in a petri dish and the mass including the petri dish was measured, respectively. Then, the petri dish was put in a humidity-controlled desiccator in the following conditions and the mass of the respective petri dishes including ammonium chloride or choline chloride was measured to calculate the amount of absorption of water after 30 minutes, 1 hour, 2 hours, 3 hours, 4 hours, 5 hours, 6 hours and 24 hours.
Conditions of humidity control: 25°C relative humidity 35%; a saturated aqueous solution of zinc nitrate hexahydrate was put in the desiccator and left to stand for 12 hours.
25°C relative humidity 60%; a saturated aqueous solution of magnesium acetate tetrahydrate was put in the desiccator and left to stand for 12 hours.

The change in the mass increase rate (%/ hour) before and after the test for each elapsed time was investigated to evaluate hygroscopic properties of ammonium chloride and choline chloride. The results are shown in Table 1.

**Table 1**

| | Mass increase rate (%/ hour) | |
|---|---|---|
| | 25°C Relative humidity 35% | 25°C Relative humidity 60% |
| Choline chloride | 0.98 | 1.75 |
| Ammonium chloride | 0 | 0 |

Table 1 shows that choline chloride has much higher hygroscopic ability than ammonium chloride.

### <Test for eliminating pressure difference in laboratory scale>

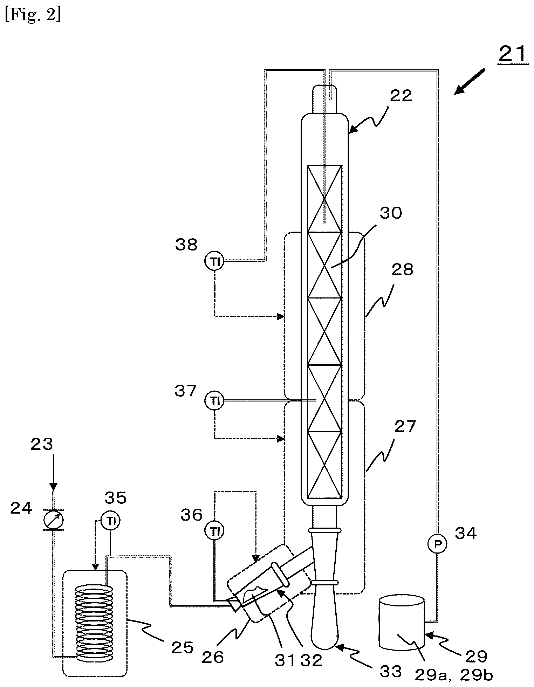

Conditions of a distillation facility which cause precipitation of salt in, for example, petroleum processing equipment, were simulated, and the apparatus for lab test shown in Fig. 2 was experimentally produced to evaluate solubility of precipitated salt, reprecipitation and discharge of salt to the trap (including analysis of chloride in the components of discharged products).

In the apparatus, temperature conditions (an area corresponding to 90 to 140°C in the top-pump around to the column top) which usually cause precipitation of salt in a distillation column of petroleum refinery equipment were reproduced.

Fig. 2 is a block diagram of the apparatus for lab test.

In the apparatus for lab test 21, salt 31 in a tube for introducing salt 32 is dissolved and evaporated in a fractionating column 22 equipped with the tube for introducing salt 32 containing salt 31 whose temperature is controlled by a heater (B) 26 thereunder, a lower trap 33 which receives chloride discharged, a heater (C) 27 and a heater (D) 28 for controlling the temperature in the fractionating column 22 and a glass random packing 30, by means of nitrogen 23 which is a carrier gas heated at a pre-determined temperature by a heater (A) 25 through flow meter 24, and the resultant is introduced thereinto from the lower part of the fractionating column 22. Meanwhile, salt remover 29a or cleaning water 29b in a tank 29 is introduced thereinto from the top of the fractionating column 22 through a pump 34. The temperature of the respective heaters is monitored using thermometers 35 to 38.

### (Example 1)

Test conditions and the salt and the agent for eliminating pressure difference used will be shown below.
Material of apparatus for lab test and packing: heat resistant glass
Carrier gas: nitrogen
Fractionating column: inner diameter 15 cm, inner height 40 cm
Temperature of carrier gas (heater (A)): set temperature 200°C
Temperature for heating salt (heater (B)): set temperature 180°C
Heater (C): set temperature 120°C
Heater (D): set temperature 90°C
Salt used: 5 g of ammonium chloride (made by Kishida Chemical Co., Ltd., special grade, 99.5%)
Agent for eliminating pressure difference: aqueous choline solution (40% by mass or more) 3 g/ minute

Using the apparatus for lab test, solubility of precipitated salt, reprecipitation and discharge of salt to the trap were evaluated (including analysis of chloride in the components of discharged products) through the following processes (a) to (d). The results are shown in Table 2.
(a) Salt is heated and supplied to the fractionating column by the stream of nitrogen gas heated.
(b) The fractionating column is heated excluding the top and the bottom (lower trap). Heating avoids precipitation of salt in the region between the top and the bottom.
(c) Salt is precipitated on the packing at the opening of the fractionating column.
(d) The salt remover is added thereto from the top of the fractionating column.

### (Comparative Example 1)

Solubility of precipitated salt, reprecipitation and discharge of salt to the trap were evaluated (including analysis of chloride in the components of discharged products) in the same manner as in Example 1 except for adding pure water (2 ml/ minute) instead of dropping choline as a salt remover in the process (d) in Example 1. The results are shown in Table 2.

**Table 2**

| | Salt remover | Solubility of precipitated salt | Reprecipitation | Discharge of salt to trap | Chloride in discharged components |
|---|---|---|---|---|---|
| Example 1 | Choline | A | A | A | A |
| Comparative Example 1 | Pure water | A | B | B | B |

Table 2 shows that choline, which has been used as an agent for eliminating pressure difference, allows chloride which causes pressure difference in a distillation column to be discharged to the trap without reprecipitation of salt.

### Industrial Applicability

The method for eliminating pressure difference of the present invention can eliminate pressure loss (pressure difference) caused by salt derived from impurities in raw materials in a distillation facility during operation, and thus can improve use efficiency of the facility and achieve long life of the facility. Furthermore, since the present invention has no effect on fractions to be purified, yield can be improved and production cost can be expected to be reduced. Moreover, since the present invention has no negative effect on production and facility, it can be used regularly.

### Reference Signs List

1: Distillation facility
2,4,8,9: Line
3: Distillation column
5: Air-cooled cooler
6: Water-cooled cooler
7: Naphtha receiver
10: Drain part
11: Heater
12: Side stripper
13,14,15,16: Line
17a,17b,17c: Line for injecting salt remover
21: Apparatus for lab test
22: Fractionating column
23: Nitrogen
24: Flow meter
25: Heater (A)
26: Heater (B)
27: Heater (C)
28: Heater (D)
29: Tank
29a: Salt remover
29b: Cleaning water
30: Glass random packing
31: Salt
32: Tube for introducing salt
33: Lower trap
34: Vacuum pump
35,36,37,38: Thermometer

## Claims

1. A method for eliminating occurrence of pressure difference caused by precipitation of salt in a distillation facility, comprising using a quaternary ammonium compound represented by the following formula [1] as a salt remover: 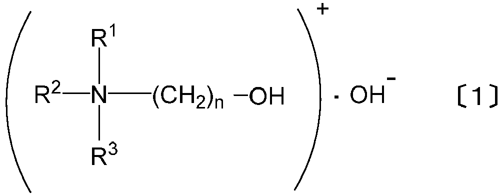 wherein R¹, R² and R³ each independently represent a hydrocarbon group having 1 to 4 carbon atoms, and n represents an integer of 1 to 10.

2. The method for eliminating pressure difference according to claim 1, wherein R¹, R² and R³ in the formula [1] each independently represent a hydrocarbon group having 1 to 3 carbon atoms, and n represents an integer of 1 to 4.

3. The method for eliminating pressure difference according to claim 1 or 2, wherein the quaternary ammonium compound is β-hydroxyethyl trimethylammonium hydroxide.

4. The method for eliminating pressure difference according to any one of claims 1 to 3, wherein the distillation facility is for a petroleum refinery process, a petrochemical process or a coal chemical process.

5. The method for eliminating pressure difference according to any one of claims 1 to 4, wherein the quaternary ammonium compound represented by the formula [1] is contained in a process fluid to be brought into contact with a distillation column in the distillation facility.

6. An agent for eliminating occurrence of pressure difference caused by precipitation of salt in a distillation facility, comprising a quaternary ammonium compound represented by the following formula (1): 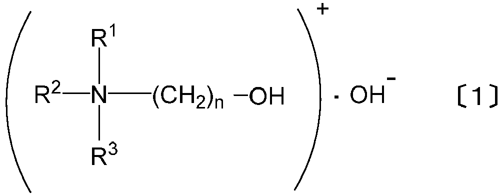 wherein R¹, R² and R³ each independently represent a hydrocarbon group having 1 to 4 carbon atoms, and n represents an integer of 1 to 10.
